# EUROPÄISCHE PATENTSCHRIFT

(11) **EP 1 488 898 B1**
(45) Veröffentlichungstag und Bekanntmachung des Hinweises auf die Patenterteilung: **30.10.2013**
(21) Anmeldenummer: 04011602.2
(22) Anmeldetag: 15.05.2004
(51) Int. Cl.: B27L 11/02, C08L 97/02, C08L 101/00, C08K 7/00

(54) **Holzteilchen-Gemenge für einen Holz-Kunststoff-Verbundwerkstoff und Verfahren zur Herstellung des Holzteilchen-Gemenges**
Wood particle mixture for a wood-plastic composite material and process for producing the wood particle mixture
Mélange de particules de bois pour un matériau composite bois-plastique et procédé pour la production du mélange de particules de bois

(30) Priorität: 18.06.2003 DE 10327848
(43) Veröffentlichungstag der Anmeldung: 22.12.2004
(73) Patentinhaber: Brandenburg, Kay, 49377 Vechta (DE)
(72) Erfinder: Brandenburg, Kay, 49377 Vechta (DE)
(74) Vertreter: Jabbusch, Wolfgang

(56) Entgegenhaltungen:
- EP-A- 1 004 413
- WO-A-96/34045
- DE-A- 2 233 374
- DE-B- 1 217 588
- DE-B- 1 223 529
- FR-A- 1 020 295
- US-A- 2 776 686
- US-A- 4 301 846

## Beschreibung

Die Erfindung betrifft ein Holzteilchen-Gemenge sowie ein Verfahren zum Herstellen eines Holzteilchen-Gemenges, insbesondere aus Rohholz, für einen extrudierten oder spritzgegossenen Holz-Kunststoff-Verbundwerkstoff, insbesondere Holz-Kunststoff-Compound. Außerdem betrifft die Erfindung eine Vorrichtung zur Durchführung des erfindungsgemäßen Verfahrens.

Es ist bekannt, derartige Holzteilchen-Gemenge in verschiedene Kunststoffe, insbesondere in Polypropylene, einzubringen, wobei jedes einzelne Holzteilchen vom Kunststoff umschlossen wird. Derartige Holz-Kunststoff-Verbundwerkstoffe sind aus der WO 96/34045 bekannt. Da ihre Festigkeitseigenschaften maßgeblich von der Homogenität ihres Verbundes abhängig sind, liegen die einzelnen Holzteilchen des Holzteilchen-Gemenges in einem vordefinierte Grenzen aufweisenden Größenbereich. Aber auch die Gestalt der einzelnen Teilchen und ihre Ausrichtung innerhalb des Holz-Kunststoff-Verbundwerkstoffes beeinflussen die Festigkeitseigenschaften maßgeblich.

Der Erfindung liegt die Aufgabe zugrunde, ein Holzteilchen-Gemenge, ein Verfahren und eine Vorrichtung der eingangs beschriebenen Gattung aufzuzeigen, mit denen die Festigkeitseigenschaften in einem Holz-Kunststoff-Verbundwerkstoff deutlich verbessert sind.

Diese Aufgabe ist erfindungsgemäß durch ein Holzteilchen-Gemenge mit den Merkmalen des Patentanspruchs 1, und einem Verfahren mit den Merkmalen des Patentanspruchs 9 gelöst. Vorteilhafte Weiterbildungen der Erfindung sind in den jeweils auf diese Patentansprüche rückbezogenen Unteransprüchen angegeben.

Das Holzteilchen-Gemenge zeichnet sich dadurch aus, daß jedes seiner Holzteilchen zwei seine Dicke begrenzende, etwa in Richtung seiner Fasern verlaufende Schnittflächen aufweist, und das jedes Holzteilchen seine Länge in Faserrichtung sowie seine Breite quer zur Faserrichtung begrenzende Schnittund/oder Bruchkanten aufweist. Ein derartig ausgebildetes Holzteilchen weist somit, bezogen auf sein Körpervolumen, wenige, dafür aber lang ausgebildete Fasern auf. Die Verwendung derartig ausgebildeter Holzteilchen-Gemenge in einem Holz-Kunststoff-Verbundwerkstoff hat den Vorteil, daß die Verbindungen zwischen den einzelnen Holzteilchen und dem Kunststoff im wesentlichen längs der Fasern verlaufen, so daß die einzelnen Fasern die Zug- und Biegefestigkeit des Holz-Kunststoff-Verbundwerkstoffes besonders effektiv erhöhen.

Nach einer Weiterbildung der Erfindung weisen wenigstens 90 Gewichtsprozent der Holzteilchen eine Dicke zwischen 0,2 mm und 2,0 mm vorzugsweise eine Dicke zwischen 0,4 mm und 0,5 mm sowie eine Länge und eine Breite bis zu 8,0 mm auf. Diese Größenbereichsangaben sind als bevorzugte Bereiche zu verstehen, mit denen eine ausreichende Homogenität im Holzverbundwerkstoff erzielbar ist. Besonders bevorzugt ist jedoch vorgesehen, daß wenigstens 90 Gewichtsprozent der Holzteilchen eine Dicke zwischen 0,2 mm und 1,4 mm sowie eine Länge und eine Breite bis zu 2,5 mm aufweisen.

Nach einer nächsten Weiterbildung der Erfindung sind die in Faserrichtung verlaufenden Schnittflächen etwa parallel zueinander angeordnet. Damit erhalten die einzelnen Holzteilchen jeweils die Form eines abgeplatteten Faserstrangabschnittes, der die Festigkeitseigenschaften des Holz-Kunststoff-Verbundwerkstoffes weiter verbessert.

Es wird vorgeschlagen, daß jedes Holzteilchen aus Fichtenholz besteht. Fichtenholz genügt den Anforderungen für den Holzverbundwerkstoff und steht in Europa besonders kostengünstig in ausreichenden Mengen zur Verfügung. Weiterhin wird vorgeschlagen, daß jedes Holzteilchen aus Loplollypine-Holz besteht, das in den USA preiswert in ausreichenden Mengen zur Verfügung steht. Es ist jedoch ebenso denkbar, auch andere Holzarten zu verwenden, beispielsweise wenn diese in einem Gebiet oder Erdteil besonders kostengünstig erhältlich sind oder wenn diese eine spezielle Eignung im Einsatz für Holz-Kunststoff-Verbundwerkstoffe aufweisen.

Es ist weiterhin vorgesehen, daß das Holzteilchen-Gemenge eine Feuchtigkeit von weniger als 15 % bezogen auf die absolute Trockenmasse aufweist. Die geringe Feuchtigkeit ist in erster Linie wichtig, um bei der Extrusion von Holz-Kunststoff-Compounds gleichbleibende Betriebsbedingungen zu gewährleisten. Bei der Extrusion herrschen hohe Temperaturen, die zu einem zwangsläufigen Verdunsten der im Holzteilchen-Gemenge gebundenen Feuchtigkeit führt. Gleiches gilt auch beim Spritzgießen. Weiterhin wird mit der Feuchtigkeit von kleiner 15 % ein Pilzbefall weitestgehend verhindert, so daß das Endprodukt aus dem Holz-Kunststoff-Verbundwerkstoff lagerfähig ist.

Nach einer anderen Weiterbildung der Erfindung weist das Holzteilchen-Gemenge einen Extraktstoffgehalt von weniger als 5,5 % bezogen auf die absolute Trockenmasse auf. Diese Angabe basiert auf Messungen nach der Ethanol-Cyclohexan-Methode oder nach der Heißwasser-Methode. Ein niedriger Extraktstoffgehalt, insbesondere ein niedriger Harzgehalt, ist in erster Linie wichtig, damit die Oberflächen der Extrusionswerkzeuge nicht verkleben und um an den Extrusionswerkzeugen konstante und nicht zu hohe Reibwiderstände gewährleisten zu können.

Nach dem erfindungsgemäßen Verfahren wird vorgesehen, daß aus dem Rohholz mittels wenigstens einer Schneide Flachspäne erzeugt werden, daß die Flachspäne zerschnitten werden, daß die zerschnittenen Flachspäne zu Flachsplittern zerbrochen werden, und daß die Flachsplitter gesiebt werden. Jeder Schneide ist mit Vorteil eine besonders großvolumige Spantasche zugeordnet, so daß die Flachspäne eine besonders geringe Krümmung aufweisen.

Nach einer Weiterbildung der Erfindung werden die Flachspäne mittels parallel zu den Fasern des Rohholzes gestellter Schneide erzeugt. Das hat den Vorteil, daß die Flachspäne in der Spantasche lediglich um eine in Richtung der Fasern verlaufende Linie gebogen werden. Die einzelnen Fasern werden somit nicht gebogen.

Nachfolgend werden die einzelnen Verfahrensschritte genauer beschrieben:

Die aus dem Rohholz erzeugten Flachspäne werden in einen Naßbunker befördert, der ein Zwischenlager für eine kontinuierliche Entnahme der Flachspäne darstellt. Ein in den Naßbunker integriertes Rührwerk vermeidet ein Verkleben bzw. eine Brückenbildung der Flachspäne. Nachfolgend werden die Flachspäne vom Naßbunker über eine Vibrationsflachrinne wenigstens einer Schneidmühle mit einem Siebdurchlaß zugeführt. Die Schneidmühle weist mit Vorteil eine Schneidwalze mit V-förmig angeordneten Messern sowie eine mit den Messern korrespondierende Gegenschneide auf. Mittels Luft werden die zerschnittenen Flachspäne aus der Schneidmühle durch den Siebdurchlaß hindurch abgesaugt, in einen Naßzyklon gefördert und dort aus dem Luftstrom ausgeschieden. Danach werden die zerschnittenen Flachspäne vom Naßzyklon in einen Dosierbunker gefördert. Aus dem Dosierbunker werden die zerschnittenen Flachspäne mittels Luft in einen Trockner gefördert. Der Dosierbunker dient als Zwischenlager für den Trockner. Dieser weist einen Druckerzeuger und einen Zyklon auf, wobei die Flachspäne mit dem vom Druckerzeuger erzeugten Luftstrom durch den Trockner hindurchgefördert werden und im Zyklon wieder aus dem Luftstrom ausgeschieden werden. Die zerschnittenen und getrockneten Flachspäne werden dann vom Trockner in einen Trockenbunker gefördert, der wiederum als Zwischenlager dient, und aus dem die zerschnittenen und getrockneten Flachspäne über eine Schnecke einer Hammermühle zugeführt werden die ebenfalls einen Siebdurchlaß aufweist. Hier werden die zerschnittenen und getrockneten Flachspäne mit Schlagwerkzeugen zu Flachsplittern zerbrochen und durch den Siebdurchlaß hindurch aus der Hammermühle abgesaugt. Anschließend werden die Flachsplitter in einen Trockenzyklon gefördert, wo sie aus dem Luftstrom wieder ausgeschieden werden. Vom Trockenzyklon werden die Flachsplitter dann in eine Siebvorrichtung gefördert, in der die in einem vorbestimmten Größenbereich für das Holzteilchen-Gemenge liegenden Flachsplitter herausgesiebt und oberhalb des vorbestimmten Größenbereiches liegende Flachsplitter in den Trockenbunker zurückgefördert werden. Die zurückgeförderten Flachsplitter werden somit in der Hammermühle nachzerkleinert.

In der Siebvorrichtung werden die Flachsplitter nach der Größe ihrer ihre Dicke begrenzenden Schnittflächen sortiert. Die Siebvorrichtung weist mit Vorteil eine Beruhigungsplatte auf, auf der die Flachsplitter flach hingelegt werden. Mittels Schwenkbewegung rutschen die Flachsplitter dann über die geneigt angeordnete Beruhigungsplatte auf ein erstes Plansieb unter dem weitere Plansiebe zum Aussieben vorbestimmter Größenbereiche der Flachsplitter angeordnet sind.

Nach einer besonders vorteilhaften Weiterbildung der Erfindung ist vorgesehen, daß die von der Siebvorrichtung gesiebten und im vorbestimmten Größenbereich liegenden Flachsplitter auf ein Taumelsieb gefördert werden, mit dem unterhalb des vorbestimmten Größenbereichs für das Holzteilchen-Gemenge liegende Flachsplitter abgeschieden werden. Auf diese Weise wird weiteres Feinmaterial, das von der Siebvorrichtung nicht abgeschieden werden konnte, auf besonders effiziente Weise nachträglich ausgeschieden.

Nach einer anderen Weiterbildung der Erfindung werden die Flachspäne in undefinierten Richtungen zerschnitten. Das geschieht insbesondere dadurch, daß die Flachspäne über die Vibrationsflachrinne in undefinierter Ausrichtung den V-förmig angeordneten Messern der Schneidmühle zugeführt werden.

Nach einer besonders vorteilhaften Weiterbildung der Erfindung ist vorgesehen, daß aus dem Rohholz und/oder den Flachspänen und/oder aus den zerschnitten Flachspänen und/oder aus den Flachsplittern und/oder aus dem Holzteilchen-Gemenge Extraktstoffe, insbesondere Harze herausgewaschen werden. Das geschieht beispielsweise mit der Ethanol-Cyclohexan-Methode oder der Heißwasser-Methode.

Die erfindungsgemäße Vorrichtung dient zur Durchführung des erfindungsgemäßen Verfahrens und zeichnet sich dadurch aus, daß die Siebvorrichtung wenigstens zwei nacheinander angeordnete Plansiebe mit unterschiedlicher Maschenweite aufweist. Die Plansiebe dienen dazu, die in einem vorbestimmten Größenbereich für das Holzteilchen-Gemenge liegenden Flachsplitter auszusieben. Um die für das erfindungsgemäße Holzteilchen-Gemenge genannten Größenverhältnisse der einzelnen Holzteilchen realisieren zu können, weist das erste Plansieb eine lichte Maschenweite zwischen 2 mm und 4 mm auf. Das zweite Plansieb hingegen weist eine lichte Maschenweite zwischen 0,5 mm und 1,0 mm auf. Die Maschen der Plansiebe sind quadratisch ausgebildet.

Außerdem ist vorgesehen, daß die Schneidmühle austrittsseitig wenigstens einen Siebdurchlaß aufweist, der als Langlochsieb ausgebildet ist, dessen Langlöcher eine Länge zwischen 40 mm und 70 mm aufweisen und eine Breite zwischen 3 mm und 8 mm aufweisen.

Die Hammermühle weist austrittsseitig wenigstens zwei unterschiedliche, im Wechsel angeordnete Siebdurchlässe auf, die als Langlochsiebe ausgebildet sind, wobei der Unterschied zwischen den Siebdurchlässen im wesentlichen darin besteht, daß die Langlöcher eines der Siebdurchlässe etwa die doppelte Breite der Langlöcher des anderes Siebdurchlasses aufweisen. Mit einer derartigen Ausgestaltung wird mit Vorteil vermieden, daß die Flachsplitter die Siebdurchlässe zusetzen bzw. verstopfen. Die Langlöcher der in der Hammermühle angeordneten Siebdurchlässe weisen eine Länge zwischen 10 mm und 50 mm und eine Breite zwischen 0,5 mm und 2,5 mm auf.

Nach einer Weiterbildung der Erfindung weisen die Langlöcher der in der Hammermühle angeordneten Siebdurchlässe sowie der in der Schneidmühle angeordneten Siebdurchlässe einen umlaufenden Abstand bzw. eine Stegbreite zwischen 0,5 mm und 5,0 mm zueinander auf.

Die Schneide zum Erzeugen der Flachspäne weist eine Länge zwischen 15 mm und 25 mm auf. Die Schneiden sind mit Vorteil auf einer Vielzahl von Schneidkämmen zusammengefaßt, die wiederum am Umfang einer Zerspanungswalze verteilt angeordnet sind. Außerdem wird vorgeschlagen, daß die Schneide in der Vorrichtung derart eingestellt ist, daß das Verhältnis zwischen der Schnittgeschwindigkeit geteilt durch die Vorschubgeschwindigkeit zwischen 550 und 750 vorzugsweise 650 beträgt. Bei einer Schnittgeschwindigkeit von 39 m/s ergibt sich demzufolge eine bevorzugte Vorschubgeschwindigkeit von etwa 0,06 m/s.

Ein Ausführungsbeispiel der Erfindung, aus dem sich weitere erfinderische Merkmale ergeben, ist in den Zeichnungen dargestellt.
- Figur 1: zeigt eine Draufsicht auf einen Lageplan für eine Vorrichtung zur Durchführung des erfindungsgemäßen Verfahrens;
- Figur 2: zeigt eine perspektivische Ansicht eines Flachspans zur Herstellung eines erfindungsgemäßen Holzteilchen-Gemenges in vergrößertem Maßstab;
- Figur 3: zeigt eine perspektivische Ansicht von zerkleinerten Flachspänen aus dem in Fig. 2 dargestellten Flachspan; und
- Figur 4: zeigt eine perspektivische Ansicht von Flachsplittem aus den in Figur 3 dargestellten zerschnittenen Flachspänen.

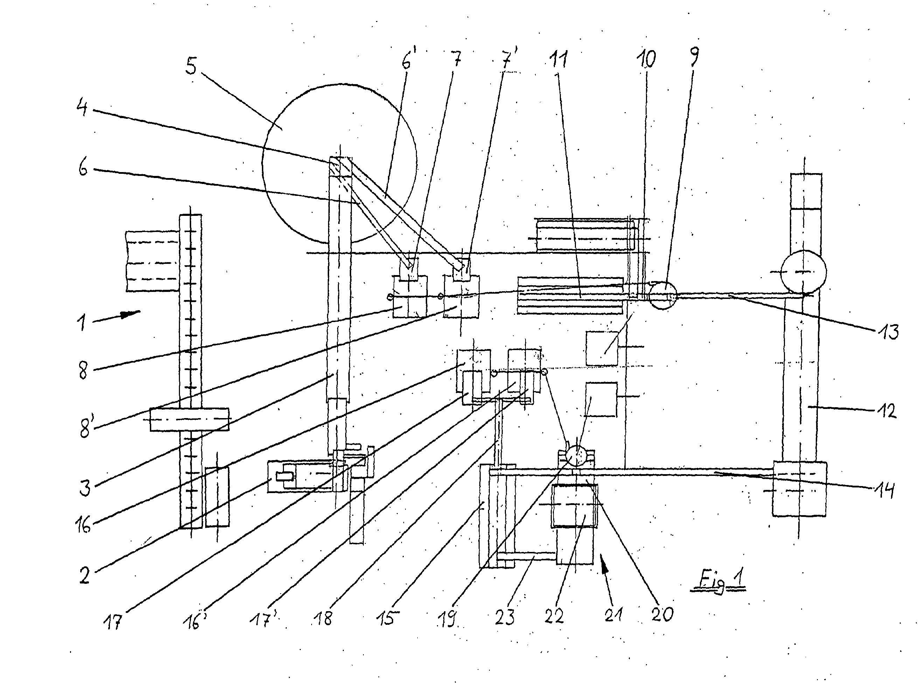

Die Figur 1 zeigt eine Draufsicht auf einen Lageplan für eine Vorrichtung, an welcher das erfindungsgemäße Verfahren zur Herstellung eines Holzteilchen-Gemenges im Folgenden beschrieben werden soll:

Baumstämme werden von einer Entrindungsvorrichtung 1 geschält. Die entrindeten Baumstämme werden dann einem Messerwellenzerspaner 2 bzw. einem Messerringzerspaner zugeführt, in welchem die geschälten Baumstämme zu Flachspänen verarbeitet werden. Vom Messerwellenzerspaner 2 werden die Flachspäne über eine Schnecke 3 und einen Elevator 4 in einen Naßbunker 5 transportiert. Der Naßbunker 5 ist als Zwischenlager für eine kontinuierliche Entnahme der Flachspäne ausgebildet. Von hier werden die Flachspäne über zwei Schnecken 6, 6' und zwei Vibrationsflachrinnen 7, 7' in zwei Schneidmühlen 8, 8' transportiert, in denen die Flachspäne zerschnitten werden. Mittels Luft werden die zerschnittenen Flachspäne dann aus den Schneidmühlen 8, 8' abgesaugt und in einen Naßzyklon 9 befördert, der die zerschnittenen Flachspäne aus der Luft ausscheidet. Vom Naßzyklon 9 werden die zerschnittenen Flachspäne mit einem Druckkettenförderer 10 in einen Dosierbunker 11 befördert. Der Dosierbunker 11 ist als Zwischenlager für einen Trockner 12 ausgebildet und ist über einen Druckkettenförderer 13 mit dem Trockner 12 verbunden. In diesem werden die zerschnittenen Flachspäne getrocknet, weshalb man bei den zuvorbeschriebenen Anlagekomponenten von der "Naßseite" spricht und bei den nachfolgend beschriebenen Anlagekomponenten von der "Trockenseite" spricht.

Durch den Trockner 12 werden die zerschnittenen Flachspäne hindurchgesaugt und austrittsseitig über einen Druckkettenförderer 14 in einen Trockenbunker 15 befördert. Der Trockenbunker 15 ist als Zwischenlager für zwei Hammermühlen 16, 16' ausgebildet, die jeweils über eine Vibrationsflachrinne 17, 17' und eine gemeinsame Schnecke 18 mit dem Trockenbunker 15 verbunden sind. In den Hammermühlen 16, 16' werden die zerschnittenen und getrockneten Flachspäne zu Flachsplittem zerbrochen. Die Flachsplitter werden aus den Hammermühlen 16, 16' mittels Luft abgesaugt und in einen Trockenzyklon 19 gefördert. In diesem werden die Flachsplitter aus dem Luftstrom ausgeschieden. Vom Trockenzyklon 19 werden die Flachsplitter über eine geneigt angeordnete Beruhigungsplatte 20 in eine Siebvorrichtung 21 gefördert. In der Siebvorrichtung werden die in einem vorbestimmten Größenbereich für das erfindungsgemäße Holzteilchen-Gemenge liegenden Flachsplitter mittels übereinander angeordneter Plansiebe 22 herausgesiebt. Oberhalb des vorbestimmten Größenbereichs liegende Flachsplitter werden von der Siebvorrichtung 21 über einen Druckkettenförderer 23 in den Trockenbunker 15 zurückgefördert. Die im vorbestimmten Größenbereich liegenden Flachsplitter werden vom Plansichter 21 über einen Elevator (nicht dargestellt) in einen Fertigwarensilo (nicht dargestellt) befördert.

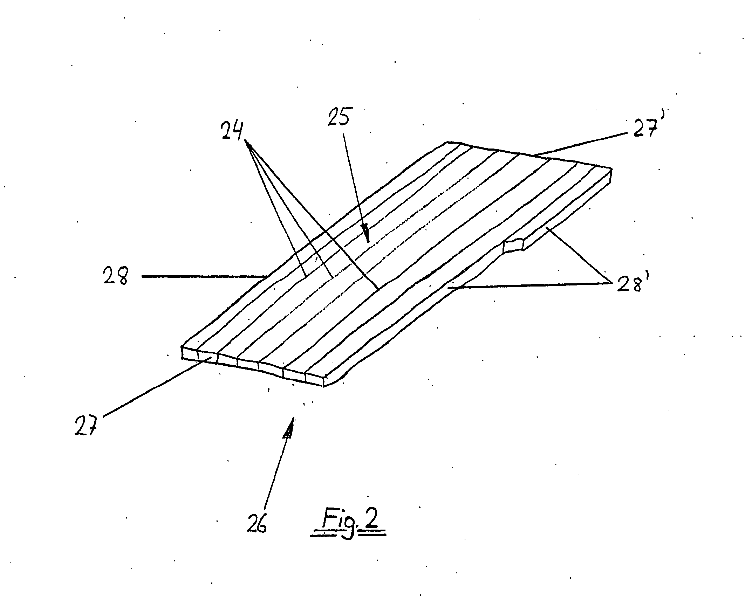

Die Fig. 2 zeigt einen Flachspan zur Herstellung eines erfindungsgemäßen Holzteilchen-Gemenges. Der Flachspan weist zwei seine Dicke begrenzende, in Richtung seiner Fasern 24 verlaufende Schnittflächen 25, 26 auf. Die Breite des Flachspanes in Richtung seiner Fasern 24 wird durch Schnittkanten 27, 27' begrenzt. Die Länge des Flachspanes quer zur Richtung seiner Fasern 24 wird durch Bruchkanten 28, 28' begrenzt.

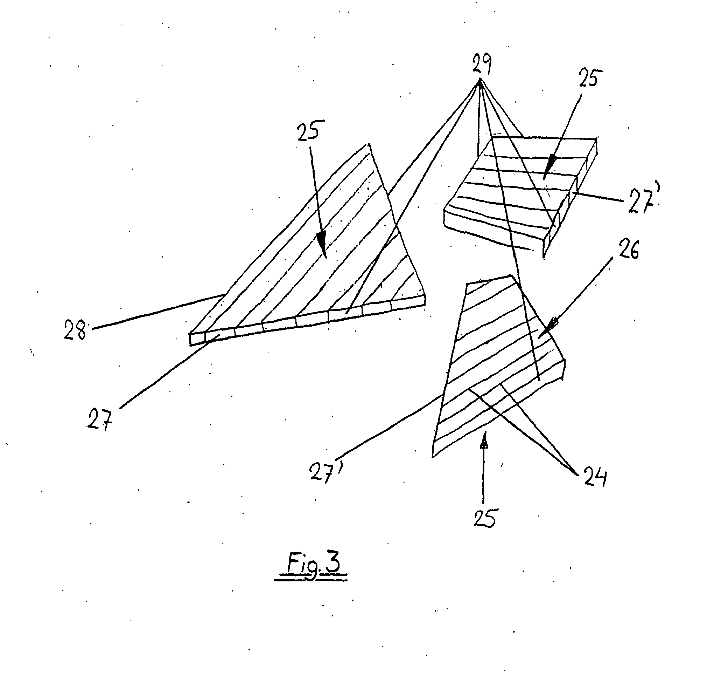

Die Fig. 3 zeigt zerkleinerte Flachspäne aus dem in Fig. 2 dargestellten Flachspan. Die zerkleinerten Flachspäne weisen Schnittkanten 29 auf, die zu den Fasern 24 in undefinierten Richtungen verlaufen. Gleiche Flächen und Kanten sind mit gleichen Bezugszahlen versehen.

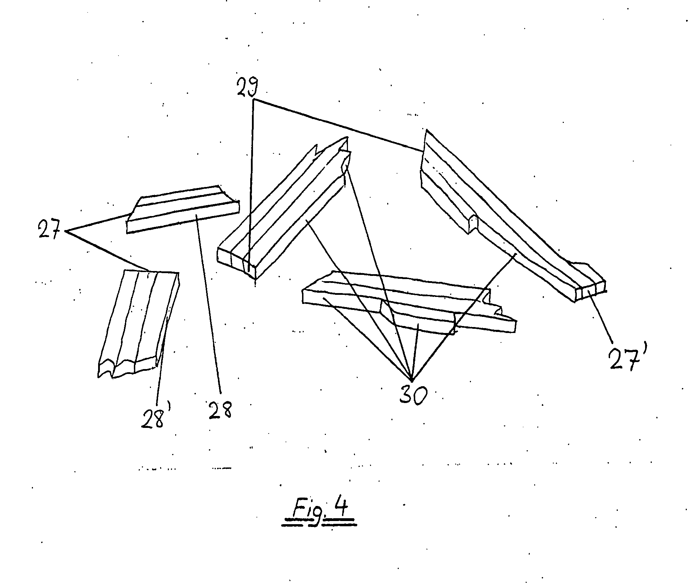

Die Fig. 4 zeigt Flachsplitter aus den in Fig. 3 dargestellten zerschnittenen Flachspänen. Die Flachsplitter weisen Bruchkanten 30 auf, die etwa in Richtung der Fasern 24 verlaufen. Gleiche Flächen und Kanten sind mit gleichen Bezugszahlen versehen.

## Patentansprüche

1. Holzteilchen-Gemenge aus Rohholz für einen extrudierten oder spritzgegossenen Holz-Kunststoff-Verbundwerkstoff, insbesondere hergestellt aus Holz-Kunststoff-Compounds,
**dadurch gekennzeichnet,**
**daß** jedes Holzteilchen zwei seine Dicke begrenzende, etwa in Richtung seiner Fasern (24) verlaufende Schnittflächen (25, 26) eines Flachspans aufweist, und
**daß** jedes Holzteilchen seine Länge in Richtung der Fasern (24) sowie seine Breite quer zur Richtung der Fasern (24) begrenzende Schnittkanten (27, 27', 29) und/oder Bruchkanten (28, 28', 30) aufweist.

2. Holzteilchen-Gemenge nach Anspruch 1, **dadurch gekennzeichnet, daß** wenigstens 90 Gewichtsprozente der Holzteilchen eine Dicke zwischen 0,2 mm und 2,0 mm sowie eine Länge und eine Breite bis zu 8,0 mm aufweisen.

3. Holzteilchen-Gemenge nach Anspruch 1, **dadurch gekennzeichnet, daß** wenigstens 90 Gewichtsprozente der Holzteilchen eine Dicke zwischen 0,2 mm und 1,4 mm sowie eine Länge und eine Breite bis zu 2,5 mm aufweisen.

4. Holzteilchen-Gemenge nach einem der Ansprüche 1 bis 3, **dadurch gekennzeichnet, daß** die in Richtung der Fasern (24) verlaufenden Schnittflächen (25, 26) eines Flachspans parallel zueinander angeordnet sind.

5. Holzteilchen-Gemenge nach einem der Ansprüche 1 bis 4, **dadurch gekennzeichnet, daß** jedes Holzteilchen aus Fichtenholz besteht.

6. Holzteilchen-Gemenge nach einem der Ansprüche 1 bis 4, **dadurch gekennzeichnet, daß** jedes Holzteilchen aus Loplollypine-Holz besteht.

7. Holzteilchen-Gemenge nach einem der Ansprüche 1 bis 6, **dadurch gekennzeichnet, daß** es eine Feuchtigkeit von weniger als 15 % bezogen auf die absolute Trockenmasse aufweist.

8. Holzteilchen-Gemenge nach einem der Ansprüche 1 bis 7, **dadurch gekennzeichnet, daß** es einen Extraktstoffgehalt basierend auf Messungen nach der Ethanol-Cyclohexan-Methode oder nach der Heißwasser-Methode von weniger als 5,5 % bezogen auf die absolute Trockenmasse aufweist.

9. Verfahren zum Herstellen eines Holzteilchen-Gemenges aus Rohholz, für einen extrudierten oder spritzgegossenen Holz-Kunststoff-Verbundwerkstoff, beispielsweise hergestellt aus Holz-Kunststoff-Compounds, insbesondere zur Herstellung eines Holzteilchen-Gemenges nach einem der Ansprüche 1 bis 8, **dadurch gekennzeichnet,**
**daß** aus dem Rohholz mittels wenigstens einer Schneide Flachspäne erzeugt werden,
**daß** die Flachspäne zerschnitten werden,
**daß** die zerschnittenen Flachspäne durch einen Trockner (12) hindurch gefördert werden,
**daß** die zerschnittenen und getrockneten Flachspäne zu Flachsplittern zerbrochen werden, und
**daß** die zerbrochenen Flachsplitter gesiebt werden.

10. Verfahren nach Anspruch 9, **dadurch gekennzeichnet, daß** die Flachspäne mittels parallel zu den Fasern (24) des Rohholzes gestellter Schneide erzeugt werden.

11. Verfahren nach einem der Ansprüche 9 und 10, **dadurch gekennzeichnet, daß** die Flachspäne in einen Naßbunker (5) gefördert werden,
daß die Flachspäne vom Naßbunker (5) über eine Vibrationsflachrinne (7, 7') wenigstens einer Schneidmühle (8, 8') mit Siebdurchlaß zugeführt werden, daß die zerschnittenen Flachspäne mittels Luft aus der Schneidmühle (8, 8') abgesaugt, in einen Naßzyklon (9) gefördert und dort aus dem Luftstrom ausgeschieden werden,
daß die zerschnittenen Flachspäne vom Naßzyklon (9) über einen Dosierbunker (11) in einen Trockner (12) gefördert werden, durch den sie mittels Luft hindurchgesaugt werden,
daß die zerschnittenen und getrockneten Flachspäne vom Trockner (12) in einen Trockenbunker (15) gefördert werden, aus dem sie einer Hammermühle (16, 16') mit wenigstens einem Siebdurchlaß zugeführt werden, in der sie zu Flachsplittern zerbrochen werden,
daß die Flachsplitter aus der Hammermühle (16, 16') abgesaugt, in einen Trockenzyklon (19) gefördert und dort aus dem Luftstrom ausgeschieden werden,
daß die Flachsplitter aus dem Trockenzyklon (19) in eine Siebvorrichtung (21) gefördert werden, in der die in einem vorbestimmten Größenbereich für das Holzteilchen-Gemenge liegenden Flachsplitter herausgesiebt und oberhalb des vorbestimmten Größenbereichs liegende Flachsplitter in den Trockenbunker (15) zurückgefördert werden.

12. Verfahren nach Anspruch 11, **dadurch gekennzeichnet, daß** die von der Siebvorrichtung (21) gesiebten, im vorbestimmten Größenbereich liegenden Flachsplitter auf ein Taumelsieb gefördert und dort unterhalb des vorbestimmten Größenbereichs für das Holzteilchen-Gemenge liegende Flachsplitter abgeschieden werden.

13. Verfahren nach einem der Ansprüche 9 bis 12, **dadurch gekennzeichnet, daß** die Flachspäne in undefinierten Richtungen zerschnitten werden.

14. Verfahren nach einem der Ansprüche 9 bis 13, **dadurch gekennzeichnet, daß** aus dem Rohholz und/oder den Flachspänen und/oder aus den zerschnittenen Flachspänen und/oder aus den Flachsplittern und/oder aus dem Holzteilchen-Gemenge Extraktstoffe herausgewaschen werden.

15. Maschinenanordnung zur Durchführung des Verfahrens nach einem der Ansprüche 11 bis 14,
**dadurch gekennzeichnet,**
**daß** sie einen Messerwellenzerspaner (2) zum Erzeugen von Flachspänen aufweist,
**daß** dem Messerwellenzerspaner (2) wenigstens eine Schneidmühle (8, 8') nachgeschaltet ist,
**daß** der Schneidmühle (8, 8') ein Trockner (12) nachgeschaltet ist,
**daß** dem Trockner (12) wenigstens eine Hammermühle (16, 16') nachgeschaltet ist, und
**daß** der Hammermühle (16, 16') eine Siebvorrichtung (21) nachgeschaltet ist.

16. Maschinenanordnung nach Anspruch 15, **dadurch gekennzeichnet, daß** die Siebvorrichtung (21) wenigstens zwei nacheinander angeordnete Plansiebe (22) mit unterschiedlicher Maschenweite aufweist.

17. Maschinenanordnung nach Anspruch 15 oder 16, **dadurch gekennzeichnet, daß** das erste Plansieb (22) eine lichte Maschenweite zwischen 2 mm und 4 mm aufweist.

18. Maschinenanordnung nach einem der Ansprüche 15 bis 17, **dadurch gekennzeichnet, daß** das zweite Plansieb (22) eine lichte Maschenweite zwischen 0,5 mm und 1,0 mm aufweist.

19. Maschinenanordnung nach einem der Ansprüche 15 bis 18, **dadurch gekennzeichnet, daß** die Schneidmühle (8, 8') austrittsseitig wenigstens einen Siebdurchlaß aufweist, der als Langlochsieb ausgebildet ist, dessen Langlöcher eine Länge zwischen 40 mm und 70 mm aufweisen und eine Breite zwischen 3 mm und 8 mm aufweisen.

20. Maschinenanordnung nach einem der Ansprüche 15 bis 19, **dadurch gekennzeichnet, daß** die Hammermühle (16, 16') austrittsseitig wenigstens zwei unterschiedliche, im Wechsel angeordnete Siebdurchlässe aufweist, die als Langlochsiebe ausgebildet sind, wobei der Unterschied im wesentlichen darin besteht, das die Langlöcher eines der Siebdurchlässe die doppelte Breite der Langlöcher des jeweils anderen Siebdurchlasses aufweisen.

21. Maschinenanordnung nach Anspruch 20, **dadurch gekennzeichnet, daß** die Langlöcher eine Länge zwischen 10 mm und 50 mm aufweisen und eine Breite zwischen 0,5 mm und 2,5 mm aufweisen.

22. Maschinenanordnung nach einem der Ansprüche 19 bis 21, **dadurch gekennzeichnet, daß** alle Langlöcher einen Abstand zwischen 0,5 mm und 5,0 mm zueinander aufweisen.

23. Maschinenanordnung nach einem der Ansprüche 15 bis 22, **dadurch gekennzeichnet, daß** die Schneiden des Messerwellenzerspaners (2) jeweils eine Länge zwischen 15 mm und 25 mm aufweisen.

24. Maschinenanordnung nach einem der Ansprüche 15 bis 23, **dadurch gekennzeichnet, daß** die Schneiden des Messerwellenzerspaners (2) jeweils derart eingestellt sind, daß das Verhältnis zwischen Schnittgeschwindigkeit geteilt durch Vorschubgeschwindigkeit zwischen 550 und 750 beträgt.

## Claims

1. A wood particle mixture for an extruded or injection-moulded wood-plastic composite material, in particular made of wood-plastic compounds,
**characterized in**
**that** each wood particle has two cut surfaces (25, 26) of a flake, which cut surfaces define the thickness of said wood particle and run approximately in the direction of the grains (24) thereof, and
**that** each wood particle has cut edges (27, 27', 29) and/or fracture edges (28, 28', 30) which define its length in the direction of the grains (24) and its width transverse to the direction of the grains (24).

2. The wood particle mixture according to claim 1, **characterized in that** at least 90 percent by weight of the wood particles have a thickness between 0.2 mm and 2.0 mm, and a length and a width of up to 8.0 mm.

3. The wood particle mixture according to claim 1, **characterized in that** at least 90 percent by weight of the wood particles have a thickness between 0.2 mm and 1.4 mm, and a length and a width of up to 2.5 mm.

4. The wood particle mixture according to any one of the claims 1 to 3, **characterized in that** the cut surfaces of a flake (25, 26), which cut surfaces run in the direction of the grains (24), are arranged parallel to each other.

5. The wood particle mixture according to any one of the claims 1 to 4, **characterized in that** each wood particle consists of spruce wood.

6. The wood particle mixture according to any one of the claims 1 to 4, **characterized in that** each wood particle consists of loblolly pine wood.

7. The wood particle mixture according to any one of the claims 1 to 6, **characterized in that** it has a moisture content of less than 15% based on the absolute dry mass.

8. The wood particle mixture according to any one of the claims 1 to 7, **characterized in that** based on measurements according to the ethanol-cyclohexane method or according to the hot water method, it has an extractive content of less than 5.5% based on the absolute dry mass.

9. A method for producing a wood particle mixture from raw wood for an extruded or injection-moulded wood-plastic composite material, for example made from wood-plastic compounds, in particular for producing a wood particle mixture according to any one of the claims 1 to 8,
**characterized in**
**that** flakes are generated from the raw wood by means of at least one blade,
**that** the flakes are cut up into smaller pieces,
**that** the cut-up flakes are fed through a dryer (12), and that the cut-up and dried flakes are broken into flat splinters, and
and **that** the broken flat splinters are filtered according to size.

10. The method according to claim 9, **characterized in that** the flakes are generated by means of a blade set parallel to the grains (24) of the raw wood.

11. The method according to any one of the claims 9 to 10, **characterized in that** the flakes are fed into a wet bunker (5),
that the flakes are fed from the wet bunker (5) via a vibrating flat channel (7, 7') to at least one cutting mill (8, 8') with a filter passage,
that the cut-up flakes are sucked out of the cutting mill (8, 8') by means of air, are fed into a wet cyclone (9) and are separated therein from the air flow,
that the cut-up flakes are fed from the wet cyclone (9) via a dosing bunker (11) into a dryer (12) through which they are sucked through by means of air,
that the cut-up and dried flakes are fed from the dryer (12) into a drying bunker (15) from which they are fed to a hammer mill (16, 16') which has at least one filter passage and in which the flakes are broken into flat splinters,
that the flat splinters are sucked out of the hammer mill (16, 16'), are fed into a drying cyclone (19) where they are separated from the air flow,
that the flat splinters are fed from the drying cyclone (19) into a filtering device (21) in which the flat splinters that lie within a predetermined size range for the wood particle mixture are filtered out, and flat splinters that lie above the predetermined size range are fed back into the drying bunker (15).

12. The method according to claim 11, **characterized in that** the flat splinters that are filtered by the filtering device (21) and lie within a predetermined size range are fed onto a wobble sieve where flat splinters that lie below the predetermined size range for the wood particle mixture are separated.

13. The method according to any one of the claims 9 to 12, **characterized in that** the flakes are cut up in undefined directions.

14. The method according to any one of the claims 9 to 13, **characterized in that** extractives are washed out of the raw wood and/or the flakes and/or the flat splinters and/or the wood particle mixture.

15. A machine arrangement for carrying out the method according to any one of the claims 11 to 14, **characterized in**
**that** it comprises a cutter ring chipper (2) for producing flakes,
**that** at least one cutting mill (8, 8') is arranged downstream of the cutter ring chipper (2),
**that** a dryer (12) is arranged downstream of the cutting mill (8, 8'),
**that** at least one hammer mill (16, 16') is arranged downstream of the dryer (12), and
**that** a filtering device (21) is arranged downstream of the hammer mill (16, 16').

16. The machine arrangement according to claim 15, **characterized in that** the filtering device (21) has at least two flat sieves (22) that are arranged one behind the other and have different mesh widths.

17. The machine arrangement according to claim 15 or claim 16, **characterized in that** the first flat sieve (22) has a sieve opening between 2 mm and 4 mm.

18. The machine arrangement according to the claims 15 to 17, **characterized in that** the second flat sieve (22) has a sieve opening between 0.5 mm and 1.0 mm.

19. The machine arrangement according to any one of the claims 15 to 18, **characterized in that** on the outlet side, the cutting mill (8, 8') has at least one filter passage that is formed as a slotted-hole sieve, the slotted holes of which have a length between 40 mm and 70 mm and a width between 3 mm and 8 mm.

20. The machine arrangement according to any one of the claims 15 to 19, **characterized in that** on the outlet side, the hammer mill (16, 16') has at least two alternately arranged filter passages that are formed as slotted-hole sieves, the difference substantially being that the slotted holes of one of the sieves has double the width of the slotted holes of the respective other filter passage.

21. The machine arrangement according to claim 20, **characterized in that** the slotted holes have a length between 10 mm and 50 mm and a width between 0.5 mm and 2.5 mm.

22. The machine arrangement according to any one of the claims 19 to 21, **characterized in that** all slotted holes have a distance from each other between 0.5 mm and 5.0 mm.

23. The machine arrangement according to any one of the claims 15 to 22, **characterized in that** each of the blades of the cutter ring chipper (2) have a length between 15 mm and 25 mm.

24. The machine arrangement according to any one of the claims 15 to 23, **characterized in that** each of the blades of the cutter ring chipper (2) are set such that the ratio between cutting speed divided by feed rate is between 550 and 750.

## Revendications

1. Mélange de particules de bois composées de bois brut, pour un matériau composite extrudé ou moulé par injection à base de plastique et de bois, en particulier fabriqué à partir d'un composite plastique-bois,
**caractérisé en ce que**
chaque particule de bois comporte deux surfaces de coupe (25, 26) de particule plate s'étendant approximativement dans le sens des fibres (24), et chaque particule de bois comporte des arêtes de coupure (27, 27', 29) et/ou des arêtes de rupture (28, 28', 30) délimitant sa longueur dans le sens des fibres (24) et sa largeur perpendiculairement au sens des fibres (24).

2. Mélange de particules de bois selon la revendication 1, **caractérisé en ce qu'**au moins 90 pourcent en poids des particules de bois présentent une épaisseur de 0,2 mm à 2,0 mm et une longueur et une largeur allant jusqu'à 8,0 mm.

3. Mélange de particules de bois selon la revendication 1, **caractérisé en ce qu'**au moins 90 pourcent en poids des particules de bois présentent une épaisseur de 0,2 mm à 1,4 mm et une longueur et une largeur allant jusqu'à 2,5 mm.

4. Mélange de particules de bois selon l'une des revendications 1 à 3, **caractérisé en ce que** les surfaces de coupe (25, 26) d'une particule plate s'étendant dans le sens des fibres (24) sont agencées parallèlement les unes aux autres.

5. Mélange de particules de bois selon l'une des revendications 1 à 4, **caractérisé en ce que** chaque particule de bois est constituée de bois d'épicéa.

6. Mélange de particules de bois selon l'une des revendications 1 à 4, **caractérisé en ce que** chaque particule de bois est constituée de bois de pin de Loblolly.

7. Mélange de particules de bois selon l'une des revendications 1 à 6, **caractérisé en ce qu'**il présente un taux d'humidité inférieur à 15% par rapport à la masse sèche absolue.

8. Mélange de particules de bois selon l'une des revendications 1 à 7, **caractérisé en ce qu'**il présente une teneur de matières extractives inférieure à 5,5% par rapport à la masse sèche absolue, en se basant sur des mesures selon le procédé éthanol-cyclohexane, ou selon le procédé à l'eau chaude.

9. Procédé pour la fabrication d'un mélange de particules de bois composées de bois brut, pour un matériau composite extrudé ou moulé par injection à base de plastique et de bois, en particulier fabriqué à partir d'un composite plastique-bois, en particulier pour la fabrication d'un mélange de particules de bois selon l'une des revendications 1 à 8,
**caractérisé en ce que**
des particules plates sont produites à partir d'un bois brut, au moyen d'au moins une lame,
**en ce que** les particules plates sont découpées,
**en ce que** les particules plates découpées sont transportées à travers un séchoir (12),
**en ce que** les particules plates découpées et séchées sont broyées en éclats plats, et
**en ce que** les éclats plats broyés sont tamisés.

10. Procédé selon la revendication 9, **caractérisé en ce que** les particules plates sont produites au moyen d'une lame orientée parallèlement aux fibres (24) du bois brut.

11. Procédé selon l'une des revendications 9 et 10, **caractérisé en ce que** les particules plates sont transportées dans un silo humide (5),
**en ce que** les particules plates sont transférées du silo humide (5) vers une gouttière plate vibrante (7, 7') d'au moins un broyeur (8, 8') avec passage de tamis,
**en ce que** les particules plates découpées sont aspirées hors du broyeur (8, 8') avec de l'air et transportées vers un cyclone humide (9), où elles sont éliminées du flux d'air,
**en ce que** les particules plates découpées sont transportées du cyclone humide (9) vers un séchoir (12) à travers lequel elles sont aspirées avec de l'air, en passant par un silo de dosage (11),
**en ce que** les particules plates découpées et séchées sont transportées du séchoir (12) vers un silo sec (15), à partir duquel elles sont transportées vers un moulin à marteaux (16, 16') avec au moins un passage de tamis, dans lequel elles sont broyées en éclats plats,
**en ce que** les éclats plats sont aspirés hors du moulin à marteaux (16, 16'), transportées dans un cyclone sec (19) et éliminées du flux d'air,
les éclats plats sont transportés du cyclone sec (19) vers un dispositif de tamisage (21), dans lequel les éclats de bois compris dans une plage de grandeur prédéfinie pour le mélange de particules de bois sont tamisés, tandis que les éclats plats supérieurs à une plage de grandeur prédéfinie sont renvoyés vers le silo sec (15).

12. Procédé selon la revendication 11, **caractérisé en ce que** les éclats plats compris dans des plages de grandeur prédéfinies et tamisés par le dispositif de tamisage (21) sont transportés sur un tamis oscillant, où les éclats plats inférieurs à la plage de grandeur prédéfinie pour le mélange de particules de bois sont éliminés.

13. Procédé selon l'une des revendications 9 à 12, **caractérisé en ce que** les particules plates sont découpées dans des directions indéfinies.

14. Procédé selon l'une des revendications 9 à 13, **caractérisé en ce que** des matières extractives sont éliminées par lavage du bois brut et/ou des particules plates et/ou des particules plates découpées et/ou des éclats plats et/ou du mélange de particules de bois.

15. Ensemble de machine pour l'exécution du procédé selon l'une des revendications 11 à 14,
**caractérisé en ce que**
il comporte une coupeuse à arbres de coupe (2) pour la production de particules plates,
**en ce qu'**au moins un broyeur (8, 8') est installé en aval de la coupeuse à arbres de coupe (2),
**en ce qu'**un séchoir (12) est installé en aval du broyeur (8, 8'),
**en ce qu'**au moins un moulin à marteaux (16, 16') est installé en aval du séchoir (12), et
**en ce qu'**un dispositif de tamisage (21) est installé en aval du moulin à marteaux (16, 16').

16. Ensemble de machine selon la revendication 15, **caractérisé en ce que** le dispositif de tamisage (21) comporte au moins deux tamis plans agencés l'un ç la suite de l'autre (22), avec des largeurs de maille différentes.

17. Ensemble de machine selon la revendication 15 ou 16, **caractérisé en ce que** le premier tamis plan (22) présente une largeur de maille interne entre 2 mm et 4 mm.

18. Ensemble de machine selon l'une des revendications 15 à 17, **caractérisé en ce que** le deuxième tamis plan (22) présente une largeur de maille interne entre 0,5 mm et 1,0 mm.

19. Ensemble de machine selon l'une des revendications 15 à 18, **caractérisé en ce que** côté sortie, le broyeur (8, 8') comporte au moins un passage de tamis conçu comme un tamis à trous oblongs, dont les trous oblongs présentent une longueur entre 40 mm et 70 mm et une largeur entre 3 mm et 8 mm.

20. Ensemble de machine selon l'une des revendications 15 à 19, **caractérisé en ce que** côté sortie, le moulin à marteaux (16, 16') comporte au moins deux passages de tamis différents agencés en alternance et conçus comme des tamis à trous oblongs, dans lequel la différence consiste essentiellement dans le fait que les trous oblongs de l'un des passages de tamis font deux fois la largeur des trous oblongs de l'autre passage de tamis.

21. Ensemble de machine selon la revendication 20, **caractérisé en ce que** les trous oblongs présentent une longueur entre 10 mm et 50 mm, et une largeur entre 0,5 mm et 2,5 mm.

22. Ensemble de machine selon l'une des revendications 19 à 21, **caractérisé en ce que** tous les trous oblongs présentent un espacement de 0,5 mm à 5,0 mm les uns par rapport aux autres.

23. Ensemble de machine selon l'une des revendications 15 à 22, **caractérisé en ce que** les lames de la coupeuse à arbres de coupe (2) présentent respectivement une longueur entre 15 mm et 25 mm.

24. Ensemble de machine selon l'une des revendications 15 à 23, **caractérisé en ce que** les lames de la coupeuse à arbres de coupe (2) sont respectivement réglées de façon à ce que le rapport entre la vitesse de coupe et la vitesse d'avancement soit compris entre 550 et 750.
